# EUROPEAN PATENT APPLICATION

(11) **EP 1 359 094 A2**
(43) Date of publication of application: **05.11.2003**
(21) Application number: 03009935.2
(22) Date of filing: 30.04.2003
(51) Int. Cl.: B65D 25/02, B62D 5/06, F15B 1/26, B01D 35/027

(54) **Containers**

(30) Priority: 03.05.2002 GB 0210176
(71) Applicant: J.C. BAMFORD EXCAVATORS LIMITED, Staffordshire ST14 5JP (GB)
(72) Inventor: Nurse, Andrew, Leicestershire LE12 5HS (GB); McCourt, Alastair, Yorkshire HO5 9YE (GB); Styger, Lee Edward, Derbyshire DE 13 OPQ (GB)
(74) Representative: Lucking, David John

(57) **Abstract**

A container (10) has a polymer body (12) providing an enclosed volume (16) in which in use fluid is contained, the body (12) including an engagement formation (18) from which, in use, an item (17) depends within the enclosed volume (16), characterised in that the container (10) includes at a position below the engagement formation (18), a support formation (20) formed integrally with the body (12) of the container (10) to support the item (17) from below at least when the container (10) becomes hot.

## Description

This invention relates to a container and more particularly but not exclusively to a fluid container for a vehicle, such as a motor vehicle, or for a machine, such as an excavating and/or loading machine, but a container in accordance with the present invention may be used in multifarious other applications.

It is known to mould a container in a polymer material. However, fluid containers which in use are subject to wide temperature variations, traditionally are made in metal. For example a fluid tank for hydraulic oil is traditionally made in metal because in use, the temperature variations to which the tank is subjected are substantial as the hydraulic oil becomes heated in use.

A particular problem encountered with a polymer tank which in use becomes heated, is that the polymer material becomes less rigid as it becomes hot. The problem is aggravated where the tank contains a heavy hot liquid, and where the tank has depending within it, an item such as a filter secured to the body of the tank, as the weight of the suspended item adds stresses and strains as the polymer container undergoes thermal cycles.

According to one aspect of the invention we provide a container having a polymer body providing an enclosed volume in which in use fluid is contained, the body including an engagement formation from which, in use, an item depends within the enclosed volume, characterised in that the container includes at a position below the engagement formation, a support formation formed integrally with the body of the container to support the item from below at least when the container becomes hot.

Thus the problem presented by an item depending from the engagement formation is at least reduced as the support formation assists in supporting the item at least as the container becomes hot, to disperse the weight of the item throughout the body of the container. Thus the longevity of the container is improved compared to such a container without the support formation.

Preferably the support formation is provided integrally with the polymer body by being formed as the polymer body is moulded.

In its simplest form, the support formation may include a part of the body which extends inwardly of the enclosed volume and at an exterior of the body includes a recess in the body, so that the thickness of the body wall is generally constant where the support formation is provided.

The engagement formation from which the item depends into the enclosed volume may be provided at an opening provided in the body of tank, through which fluid may flow. Typically such opening may be provided at or towards a top of the container and thus the support formation may be provided at or towards a bottom of the container.

The item may include a fluid filter to filter particulates from fluid passing into or from the container through the opening.

Where the filter of other item is long, the item may additionally be supported in the enclosed volume by a support structure which extends downwardly within the enclosed volume of the body from at or adjacent to the engagement formation. Where the item is a filter, the support formation may be a cage or mesh with a plurality of openings sufficiently large not to impede fluid flow through the filter.

In one embodiment the support structure is an integral part of the container, provided by positioning the support structure in a mould cavity and moulding the body of the container in the mould cavity.

In another embodiment, the item which in use depends within the enclosed volume is integrally provided with the body. Thus a filter may be integrally provided within the container.

The body of the container may be made by any suitable moulding technique for examples only, by rotational moulding or injection moulding. If desired the exterior of the body of the container may be provided with one or more external supporting formations for supporting at least one other item relative to the container. In one example, external supporting formation may be provided which projects outwardly of the surrounding body and in use engages with an elongate item such as one of a fluid conduit, or an electrical or optical cable.

The external supporting formation may include a pair of arms which may resiliently be moved apart to receive the item to be supported, and when released grip and support the item.

In yet another embodiment, the external supporting formation may include an enclosed supporting aperture in which the item to be supported is trapped. Whereas the item could be fed into the supporting aperture from one end, if desired, the item to be supported may be included within a mould cavity when the container body including external supporting formation is moulded.

If desired the exterior of the body may be integrally formed with other support ribs to strengthen the body in local weak areas.

According to a second aspect of the invention we provide a container having a polymer body providing an enclosed volume in which in use fluid is contained, the body including an engagement formation from which, in use, an item depends within the enclosed body, characterised in that the item is supported in the enclosed volume by a support structure which extends downwardly within the enclosed volume of the body from at or adjacent to the engagement formation, the support structure being integrally formed with the container body.

A container according to the second aspect of the invention may have any of the features of a container in accordance with the first aspect of the invention.

According to third aspect of the invention we provide in combination a container having a polymer body providing an enclosed volume in which in use fluid is contained, and an item, the body including an engagement formation from which, in use, the item depends within the enclosed body, the body including a support formation or support structure to support the item at least when the container becomes hot.

A container according to the third aspect of the invention may have any of the features of a container in accordance with any of the previous aspects of the invention.

Embodiments of the invention will now be described with reference to the accompanying drawings in which:-
FIGURE 1 is a perspective illustrative view of a container in accordance with the first aspect of the invention;
FIGURE 1a is an illustrative cross sectional view through part of the container of figure 1;
FIGURE 2 is a perspective illustrative view of a container in accordance with a second aspect of the invention;
FIGURE 3 is a perspective illustrative view of a modified container in accordance with the invention;
FIGURE 3a is a detailed view of part of the container of figure 3.

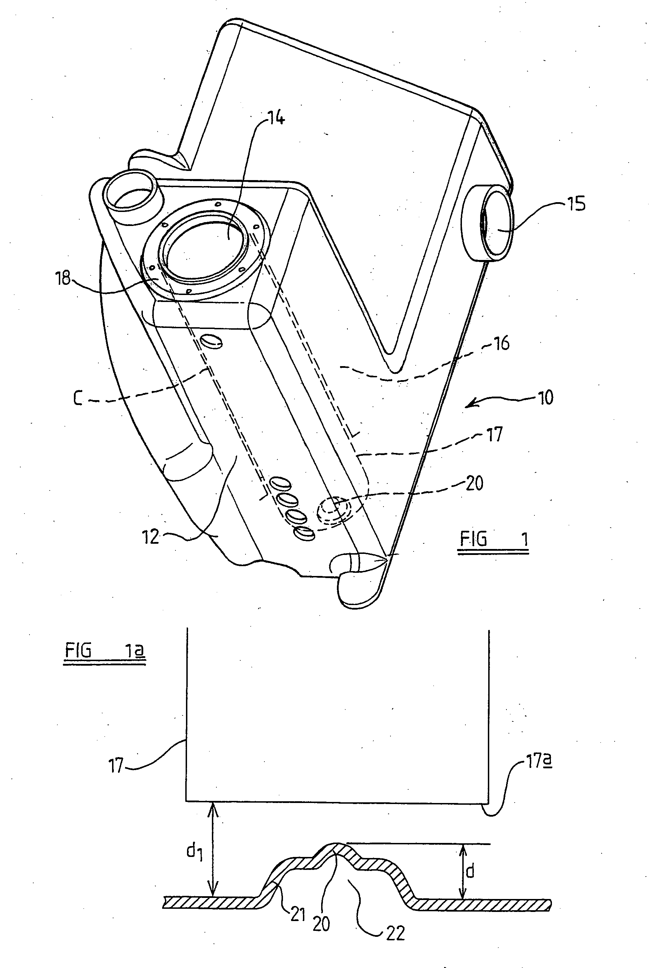

Referring to figures 1 and 1a of the drawings, a container 10 is illustrated which includes a polymer body 12 made by moulding in a polymer material, using a technique such as rotational moulding in which moulding material is introduced into a moulding cavity, and the mould is rotated about at least one axis of rotation so that the moulding material coats an inside surface of the moulding cavity to form the body 12 when the moulding material sets. However any other moulding technique may be employed to mould the container 10 such as for examples only injection moulding, transfer moulding, compression moulding, thermoforming or blow moulding.

In this example, the container 10 is a tank for hydraulic fluid for use on a machine such as an excavator and/or loading machine. The body 12 is configured to be receivable in an available space of the machine and in this example includes a first opening 14 in an upper part 13 of the body 10, at or towards a top thereof, through which the hydraulic fluid is returned to the container 10 after use, and a second opening 15 in a lower part 9 of the container body 12, through which second opening 15 hydraulic fluid may be drawn from the container. Thus the hydraulic fluid is contained within a volume 16 enclosed by the body 12.

Surrounding the first opening 14 is a circular formation 18 which in use supports an item which in this example is a filter 17, to depend within a generally cylindrical chamber C of the volume 16 enclosed by the first part 13 of the body. The filter 17 filters particulates from the hydraulic fluid to prevent the particulates being recirculated.

It will be appreciated that conventionally tanks for hydraulic fluid which are provided on working machines and vehicles are fabricated in metal, because metal is more able to withstand the stresses and strains endured as the tank cycles between hot and cold, as the hydraulic fluid in use becomes heated.

The presence of a filter 17 depending within an enclosed volume 16 of the container 10 could add to such stresses and strains.

In accordance with the first aspect of the invention, at a position below the engagement formation 18, a support formation 20 is formed integrally with the body 12 of the container 10 to support the 17 from below at least when the container 10 becomes hot.

The support formation 20 is provided integrally with the polymer body 12 by being formed as the polymer body 12 is moulded. As can be seen from figure 1a, the formation 20 is provided by a part 21 of the body 12 which extends inwardly of the enclosed volume 16 and at an exterior of the body 12 includes a recess 22 in the body 12, so that the thickness of the body wall is generally constant where the support formation 20 is provided.

The support formation 20 extends inwardly of the enclosed volume 16 a distance d which may be less than a distance d1 to a bottom of the filter 17 when the container 10 is cold. As the hydraulic fluid becomes hot, and the temperature of the container 10 increases towards the softening point of the polymer material of the body 12, the body 12 will relax, and as a result the bottom 17a of the filter 17 will move downwards in the enclosed volume 16 towards the support formation 20, and eventually the bottom 17a of the filter 17 will be supported by the support formation 20.

Thus as the container 10 becomes hot, the weight of the filter 17 will be supported from beneath and the weight will be distributed through the body 12 rather than being concentrated at the engagement formation 18 from which the filter 17 depends, thus relieving the stresses and strains to which the container 10 is subjected during heating and cooling.

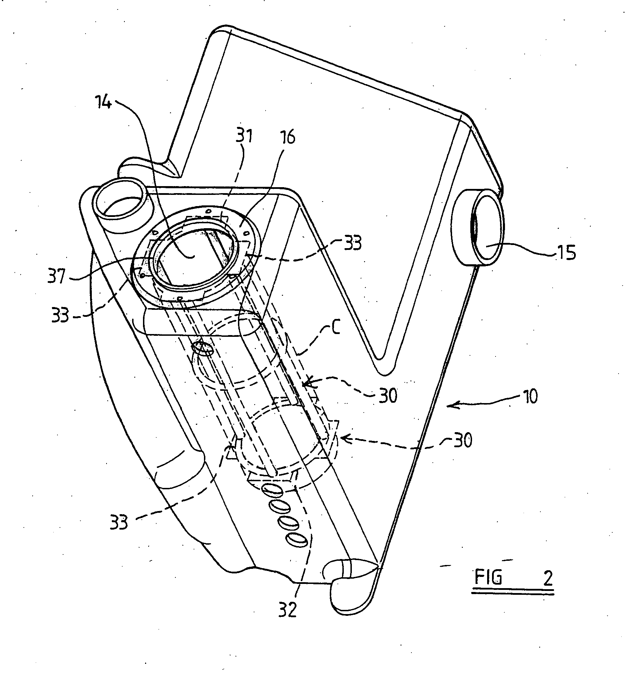

Referring now to figure 2, the container 10 of figure 1 is shown, but without the support formation 20.

In the example of figure 2, the container 10 is shown having a support structure 30 for the filter 17.

The support structure 30 extends downwardly from an upper end 31 which is fixed relative to the engagement formation 18 within the chamber C of the enclosed volume 16 towards a lower end 32 which is fixed in the chamber C of the enclosed body 12. The support structure 30 supports a filter (not shown in figure 2) within. As shown the support structure 30 is a cage but could be a mesh, or another structure 30 with apertures sufficiently large not to impede the flow of fluid therethrough to the filter 17 and hence into the container 10.

Preferably the support structure 30 is provided integrally with the moulded body 12 of the container 10, by placing the structure 30 in the moulding cavity prior to moulding the body 12. The structure 30 may be metal, another polymer or any other suitable material, which will become coated with moulding material during moulding and thus integral with the body 12, the structure 30 having outwardly extending parts 33 at its upper 31 and lower 32 ends, which become incorporated into the moulding material of the chamber C of the body 12 during moulding.

Of course the container 10 of figure 2 may be provided with a support formation as shown at 20 in figures 1 and 1a if desired. However the support structure 30, instead of supporting the filter 17 from below as the container 10 becomes hot and relaxes, supports the depending filter 17 in the enclosed volume 16 during movements of the working machine e.g. over the ground which impose sideways forces on the depending filter 17 which in the absence of the support structure 30 would place additional stresses and strains on the body 12 of the container 10 in the locality of the engagement formation 18 from which the filter 17 depends.

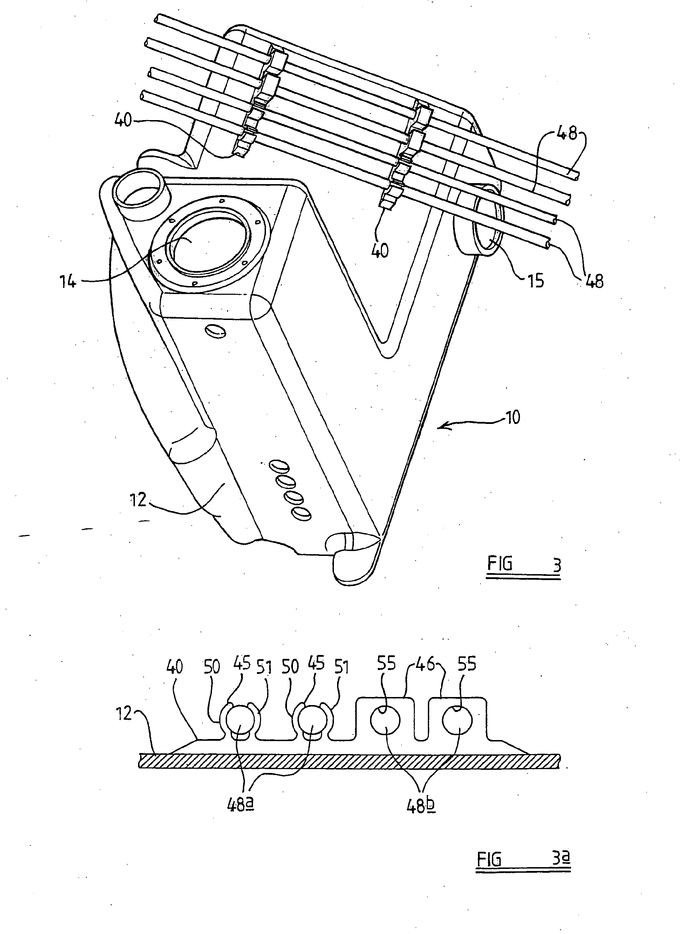

Referring now to figures 3 and 3a, a similar container 10 to that shown in the previous figures is shown, which may have either a support formation 20 as with the container of figure 1 and/or a support structure e.g. filter cage 30 for the filter 17 as in the figure 2 embodiment. The body 12 includes an integral external cross rib 40 which includes a plurality of external supporting formations 45, 46 which support external items being in the present case hydraulic lines 48. However the external supporting formations 45, 46 may instead support other elongate items exteriorly of the body 10, such as for example only, a cable or other fluid pipe or conduit.

A first set of the supporting formations 45 indicated in the figures, each include a pair of arms 50, 51 which are arcuately shaped along their length to retain a hydraulic line 48a between the pair 50, 51 in a generally round recess. The arms 50, 51 are sufficiently resilient to be movable apart to permit the line 48a to be received between the arms 50, 51 and resiliently to grip the line 48a when released.

A second set of the supporting formations 46 includes formations 46 which each includes an enclosed supporting aperture 55 in which a hydraulic line 48b to be supported is trapped.

The hydraulic lines 48a, 48b could also provide extra strength to support the container walls.

If desired, the hydraulic lines 48b may be end-fed into the apertures 55, but preferably, the hydraulic lines 48b are placed in the moulding cavity where the body 12 and integral external supporting formation 40 are moulded, so that the supporting formation material is moulded about the hydraulic line 48b.

The moulding method described with reference to the container 10 shown in figures 3 and 3a may of course be applied to the containers shown in and described with reference to the other figures.

Various modifications may be made without departing from the cope of the invention.

Although the invention has particularly been described in relation to a container for hydraulic fluid for a machine, the invention may be applied to other moulded polymer containers and tanks.

The polymer in which the body 12 etc. is moulded may be selected with regard to the fluid or fluids to be contained within the enclosed volume 16, and the configuration of the container 10.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A container (10) having a polymer body (12) providing an enclosed volume (16) in which in use fluid is contained, the body (12) including an engagement formation (18) from which, in use, an item (17) depends within the enclosed volume (16), **characterised in that** the container (10) includes at a position below the engagement formation (18), a support formation (20) formed integrally with the body (12) of the container (10) to support the item (17) from below at least when the container (10) becomes hot.

2. A container (10) according to claim 1 **characterised in that** the support formation (20) is provided integrally with the polymer body (12) by being formed as the polymer body (12) is moulded.

3. A container (10) according to claim 1 or claim 2 **characterised in that** the support formation (20) includes a part of the body (12) which extends inwardly of the enclosed volume (16) and at an exterior of the body (12) includes a recess in the body (12), so that the thickness of the body wall is generally constant where the support formation (20) is provided.

4. A container (10) according to any one of the preceding claims **characterised in that** the engagement formation (18) from which the item (17) depends into the enclosed volume (16) is provided at an opening (14) provided in the body (10) of tank, through which fluid may flow, the opening (14) being provided at or towards a top of the container (10) and the support formation (20) is provided at or towards a bottom of the container (10).

5. A container (10) according to any one of the preceding claims **characterised in that** the item (17) is long, and is additionally supported in the enclosed volume (16) by a support structure (30) which extends downwardly within the enclosed volume (16) of the body (12) from at or adjacent to the engagement formation (18), the support formation (20) being a cage or mesh with a plurality of openings sufficiently large not to impede fluid flow therethrough.

6. A container (10) according to claim 5 **characterised in that** the support structure (30) is an integral part of the container (10), provided by positioning the support structure (30) in a mould cavity and moulding the body (12) of the container (10) in the mould cavity.

7. A container (10) according to any one of the preceding claims **characterised in that** the exterior of the body (12) of the container (10) is provided with one or more external supporting formations (45, 46) for supporting at least one other item (48) relative to the container (10), the or each external supporting formation (45, 46) projecting outwardly of the surrounding body (12) and in use engaging with an elongate item (48) being one of a fluid conduit, and an electrical or optical cable.

8. A container (10) according to claim 7 **characterised in that** the external supporting formation (45, 46) includes a pair of arms (45, 46) which are resiliently moveable apart to receive the (48) to be supported, and when released grip and support the item (48).

9. A container (10) according to claim 8 **characterised in that** the item (48) to be supported is included within a mould cavity when the container body (12) and external supporting formation are moulded.

10. A container (10) having a polymer body (12) providing an enclosed volume (16) in which in use fluid is contained, the body (12) including an engagement formation (18) from which, in use, an item (17) depends within the enclosed body (12), **characterised in that** the item (17) is supported in the enclosed volume (16) by a support structure (30) which extends downwardly within the enclosed volume (16) of the body (12) from at or adjacent to the engagement formation (18), the support structure (30) being integrally formed with the container body (12).

11. A container (10) according to claim 10 having any of the features of a container (10) in accordance with anyone of claims 1 to 9.

12. In combination a container (10) having a polymer body (12) providing an enclosed volume (16) in which in use fluid is contained, and an item (17), the body (12) including an engagement formation (18) from which, in use, the item (17) depends within the enclosed volume (16), the body (12) including a support formation (20) or support structure (30) to support the item (17) at least when the container (10) becomes hot.

13. A combination according to claim 12 **characterised in that** the container (10) or the item (17) has any of the features or the container (10) or item (17) specified in any one of claims 1 to 11.
